# EUROPÄISCHE PATENTSCHRIFT

(11) **EP 2 068 007 B1**
(45) Veröffentlichungstag und Bekanntmachung des Hinweises auf die Patenterteilung: **01.02.2012**
(21) Anmeldenummer: 08020923.2
(22) Anmeldetag: 01.12.2008
(51) Int. Cl.: F16B 5/02

(54) **Verfahren und Befestigungssystem zum Anbringen von Dämmstoffplatten sowie einen Dübel und einen Halteteller**
Method and fixing system for attaching insulating boards, a dowel and a retainer
Procédé et système de fixation destinés à l'application de plaques de matériau isolant , cheville et disque de maintien

(30) Priorität: 05.12.2007 DE 102007058841; 21.11.2008 DE 102008058512
(43) Veröffentlichungstag der Anmeldung: 10.06.2009
(73) Patentinhaber: RANIT-Befestigungssysteme GmbH, 45701 Herten (DE)
(72) Erfinder: Gräwe, Bernd, 45701 Herten (DE)
(74) Vertreter: Grosse, Wolf-Dietrich Rüdiger

(56) Entgegenhaltungen:
- EP-A1- 1 046 764
- DE-A1- 4 426 957
- DE-U1- 20 320 553

## Beschreibung

Die Erfindung betrifft ein Verfahren und ein Befestigungssystem zum Anbringen von Dämmstoffplatten oder dergleichen Isoliermaterial an einen Untergrund, wobei das Befestigungssystem einen mit einer Hülse und einer daran angeformten Schneidwendel ausgebildeten Halteteller, der zum drehfesten Ansetzen eines Montagewerkzeugs in Einbaurichtung gesehen oben mit einem Drehmitnahme-Innenmehrkant versehen ist, und einen durch den Halteteller hindurchgeführten, ein in dem Untergrund verankerbares, kopfseitig ebenfalls zum drehfesten Ansetzen des Montagewerkzeugs ausgebildetes Befestigungsmittel aufnehmenden Dübel aufweist, wie aus der EP 1 046 764 A1 bekannt. Außerdem betrifft die Erfindung einen für das Verfahren und das Befestigungssystem geeigneten Dübel und einen Halteteller mit Schneidwendel.

Durch die EP 0 811 773 B1 ist ein Befestigungssystem bekannt geworden, das ein Befestigungselement mit einerseits einem wendelflächenförmigen Dämmstoffgewinde, ausgebildet um einen zylindrischen Gewindekern eines axialen Durchgangsloches, und andererseits ein damit dreh- und axialfest verbundenes, in den Untergrund verankerbares Schraubgewinde aufweist. Nach dem Durchbohren der Dämmstoffplatte bis einschließlich in den Untergrund wird das Befestigungselement eingesetzt und schneidet sich bei Drehbeaufschlagung in das Isolier- bzw. Dämmstoffmaterial ein. Der Gewindekern des Befestigungselementes ragt aus einer dem Untergrund zugewandten Seite aus der Dämmstoffplatte vor, wobei der vorkragende Überstand durch Drehen des Befestigungselementes einstellbar ist. Abgesehen davon, dass hier eine distanzierte Befestigung mit Abstand der Dämmstoffplatte vom Untergrund erreicht werden soll, sind zur Befestigung der Dämmstoffplatte mehrere Arbeitsschritte erforderlich. Denn nach dem Einschneiden des Befestigungselementes in die Dämmstoffplatte wird durch das Axialloch des Befestigungselementes eine Schraube hindurch gesteckt und in einen das Bohrloch des Untergrundes eingesetzten Dübel eingeschraubt und dadurch verankert oder wie im Falle eines Holzschraubengewindes direkt im Untergrund bzw. -bau festgesetzt.

Der Erfindung liegt die Aufgabe zugrunde, ein Verfahren sowie ein Befestigungssystem der eingangs genannten Art sowie einen dafür geeigneten Dübel und einen Halteteller mit Schneidwendel zu schaffen, die es erlauben, dass sich eine vorgefertigte Baueinheit variabel montieren lässt und insbesondere sogleich beim Montieren der Baueinheit eine feste Verpressung der Isolierung bzw. Dämmstoffplatten an den Untergrund ermöglicht wird.

Diese Aufgabe wird mit einem Verfahren erfindungsgemäß dadurch gelöst, dass das Montagewerkzeug mit gleichzeitiger Drehbewegung den sich dabei mit der Schneidwedel in die Dämmstoffplatte einschneidenden Halteteller und das dabei den Dübel spreizende Befestigungsmittel beaufschlagt, wobei einerseits der Dübel gespreizt und somit drehfest im Untergrund verankert wird und wonach andererseits der Halteteller bis zu einer drehfesten Verbindung mit dem Dübel relativ zum Dübel verschoben wird, wobei der Halteteller sich bei Erreichen der drehfesten Verbindung ebenfalls nicht mehr drehen kann und in der Folge bei fortgesetzter Drehbewegung des Befestigungsmittels mit teleskopierbarer Beweglichkeit und dabei mit Verpressung des Dämm- bzw. Isoliermaterials relativ zum festliegenden Dübel in eine Endposition verschoben wird.

Indem der Halteteller erfindungsgemäß somit zunächst um den Dübel, der abhängig vom jeweiligen Untergrund einen Dübelschaft mit angepasster Länge und Spreizzone besitzen kann, drehbar ist, kann die Schneidwendel in das Dämmmaterial eindringen, wobei damit einhergehend das Befestigungselement, vorzugsweise eine Schraube, den Dübel spreizt und fest in den Untergrund verankert. Danach verschiebt sich bzw. teleskopiert der Halteteller bei andauernder Beaufschlagung des Befestigungselementes durch das Montagewerkzeug, z.B. ein Drehwerkzeug wie ein Schraubbohrer, relativ zum festsitzenden Dübel nach unten und verpresst dabei das Isoliermaterial an den Untergrund. Bei dieser Verschiebe- bzw. Teleskopierbewegung ist der Halteteller nämlich daran gehindert, um den Dübel zu rotieren.

Das freie Ende des zuvor zur Aufnahme der Baueinheit bis in den Untergrund vorbereiteten Bohrungslochs in dem Isoliermaterial oberhalb des in seine Endposition verschobenen Haltetellers, wobei dessen Verschiebung vorzugsweise begrenzt wird, lässt sich durch einen Abdeckstopfen verschließen.

Bei einem Befestigungssystem zur Lösung der der Erfindung zugrunde liegenden Aufgabe ist erfindungsgemäß der Halteteller in seinem Hülsenteil unterhalb des Drehmitnahme-Innenmehrkantes in einem Zylinderraum mit einem Teleskopierbereich ausgebildet, der einen Kopf des Dübels begrenzt linear verschieblich aufnimmt, der Kopf des Dübels einen in Einbaurichtung gesehen oberen Zylinderabschnitt und einen sich daran nach unten hin anschließenden Außenmehrkant aufweist, dem ein am Ende des Teleskopierbereichs im Hülsenteil komplementär ausgebildeter, unterer Innenmehrkant zugeordnet ist, wobei die Linearverschiebung mit teleskopierbarer Beweglichkeit des Haltetellers relativ zum Dübel einsetzt, sobald das von dem angesetzten Montagewerkzeug gedrehte Befestigungsmittel den Halteteller bis zur Spreizung und damit drehfesten Verankerung des Dübels im Untergrund relativ zum Dübel verschoben hat und der untere Innenmehrkant des Hülsenteils den Außenmehrkant des Dübels aufnimmt, wobei der Formeingriff von Innenmehrkant mit dem Außenmehrkant den Halteteller hindert, um den Dübel zu rotieren. Der Zylinderabschnitt stellt hierbei sicher, dass sich der Halteteller zunächst um den Dübel drehen und dieser von dem Befestigungselement aufgespreizt werden kann. Die Folgebewegung zur Linearverschiebung im Teleskopierbereich mit Verpressung des Isoliermaterials durch den zuvor einschneidend eingebrachten Halteteller lässt sich dann durch erreichen, dass der Außenmehrkant des Dübelkopfes zum Formeingriff mit dem vorderen bzw. unteren Innenmehrkant des Hülsenteils des Haltetellers gebracht wird.

Eine vorteilhafte Ausgestaltung der Erfindung sieht vor, dass der Zylinderabschnitt in Einbaurichtung gesehen oben von einem Ringkragen und unten von einem umlaufenden, wulstartigen Rastnocken begrenzt ist. Die vorgefertigte Befestigungssystem-Baueinheit, bestehend aus dem Halteteller und dem Dübel, erfährt somit ihren Zusammenhalt, da das Hülsenteil mit seinem unteren bzw. vorderen Innenmehrkant zwischen dem Ringkragen und dem Rastnocken konzentrisch zum Zylinderabschnitt des Dübelkopfes positioniert ist. Der Rastnocken lässt sich hierbei in einfacher Weise so ausbilden, dass er zwar den Zusammenhalt gewährleistet, jedoch beim Einsetzen der Verschiebung bzw. Teleskopierbewegung des Haltetellers von diesem überwunden werden kann.

Die in dieser Weise mit Zusammenhalt vorgefertigte Baueinheit zeichnet sich weiterhin dadurch aus, dass der Zylinderabschnitt und der mit einer Spreizzone ausgebildete Dübelschaft des Dübels einen gleichen Durchmesser aufweisen, der kleiner als die Abmessung des Außenmehrkants ist.

Ein Vorschlag der Erfindung sieht vor, dass im Hülsenteil des Haltetellers in Einbaurichtung gesehen oberhalb des Teleskopierbereichs eine ringartige Auflagefläche ausgebildet ist. Es lässt sich darauf eine Unterlegscheibe für den Kopf des Befestigungselementes vorsehen, die gleichzeitig eine Anschlagbegrenzung für den Verschiebe- bzw. Teleskopierweg bereitstellt.

Zur Durchführung des Verfahrens und für das Befestigungssystem eignet sich in vorteilhafter Weise ein Dübel, der von oben nach unten, d.h. in Einbaurichtung gesehen mit einem eingegrenzten Zylinderabschnitt, einem Außenmehrkant und einem Dübelschaft mit Spreizzone ausgebildet ist.

Ein für das Verfahren und das Befestigungssystem vorteilhafter Halteteller mit Schneidwendel ist erfindungsgemäß dadurch gekennzeichnet, dass er ein Hülsenteil mit einer gestuften Durchgangsbohrung aufweist, die in Einbaurichtung gesehen oben mit einem ersten Innenmehrkant und am unteren Ende mit einem zweiten Innenmehrkant sowie einem zwischen diesen Mehrkantabschnitten vorgesehenen Zylinderraum ausgebildet ist, dessen Durchmesser kleiner als der lichte Querschnitt des oberen, ersten Innenmehrkants und größer als der lichte Querschnitt des unteren, zweiten Innenmehrkants ist.

Weitere Einzelheiten und Merkmale der Erfindung ergeben sich aus den Ansprüchen und der nachfolgenden Beschreibung eines in den Zeichnungen dargestellten Ausführungsbeispiels der Erfindung. Es zeigen:
- Fig. 1: als Einzelheit ein Befestigungssystems in einem Teillängsschnitt und darunter in der Draufsicht einen Halteteller mit Schneidwendel;
- Fig. 2: als Einzelheit eines Befestigungssystems in einer Längsansicht einen Dübel mit gleichzeitig zwei Querschnitten durch den Dübel- kopf, einmal entlang der Linie A - A und zum anderen entlang der Linie B - B;
- Fig. 3: in einer teilgeschnittenen Längsansicht das vorgefertigte Befe- stigungssystem, bestehend aus dem Halteteller nach Fig. 1 und dem Dübel nach Fig. 2;
- Fig. 4: in einem Teillängsschnitt das Befestigungssystem bzw. die vorgefer- tigte Baueinheit der Fig. 3 nach dem Einbringen in ein durch ein Isolationsmaterial bis in den Untergrund durchgebohrtes Loch; und
- Fig. 5: eine Darstellung wie gemäß Fig. 4 mit demgegenüber durch Te- leskopierung bzw. Verschiebung des Haltetellers gegenüber dem Dübel mit Verpressung des Isoliermaterials an den Untergrund dar- gestellter Montageposition.

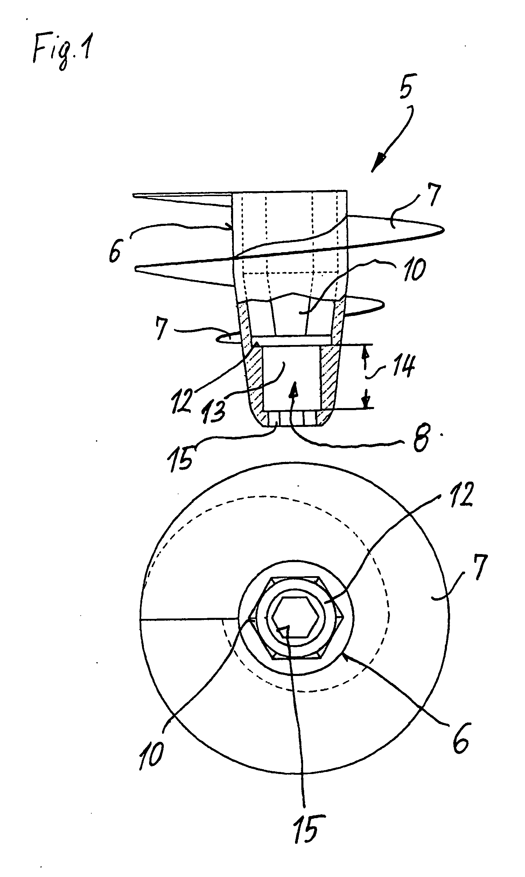

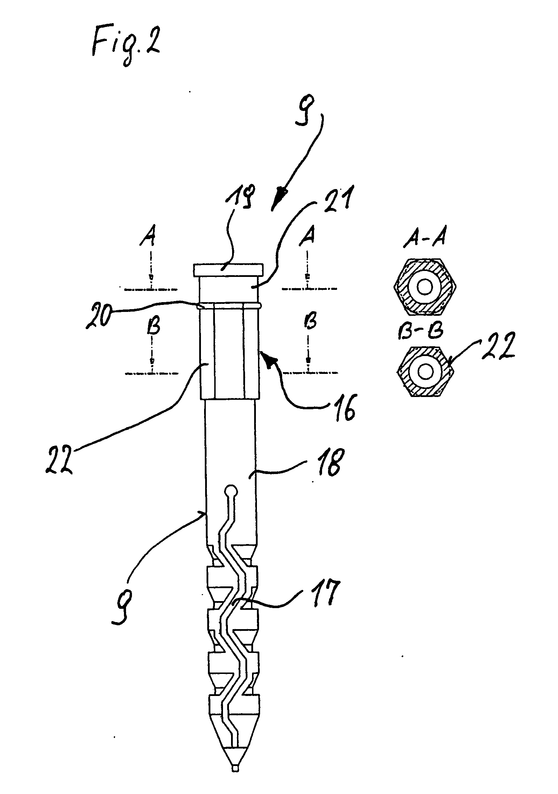

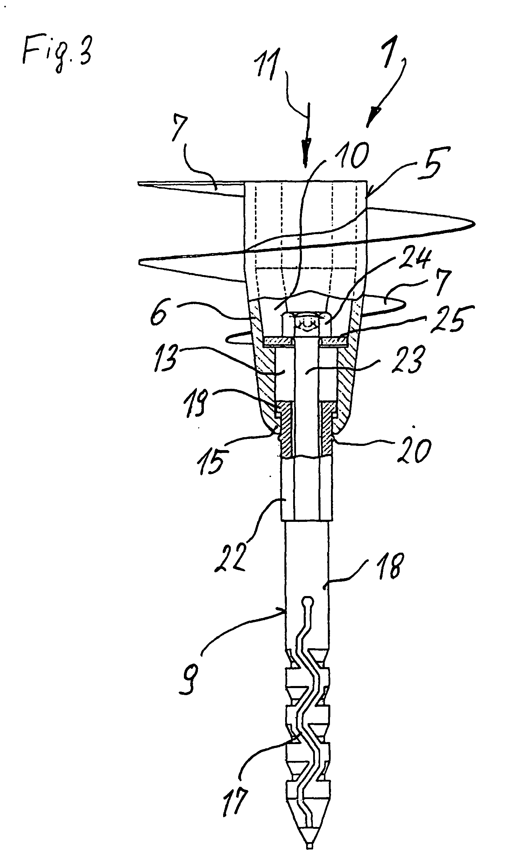

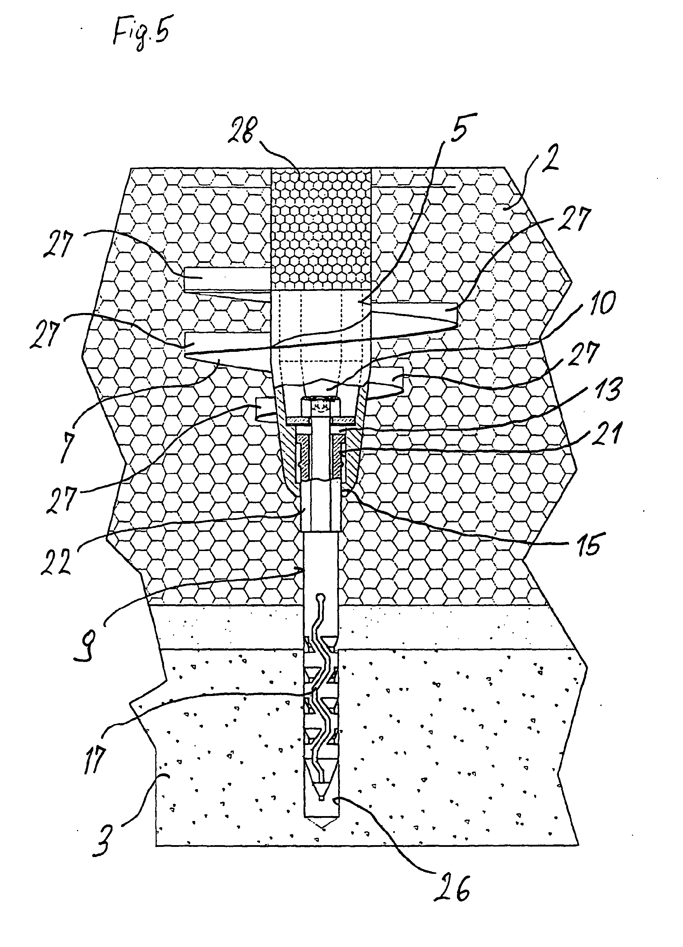

Eine nach Fig. 3 vorgefertigte Baueinheit (1) zum Anbringen von Dämmstoffplatten 2 oder dergleichen Isoliermaterial an einen Untergrund 3 unter Einschluß eines Putzklebers 4 oder dergleichen (vgl. Fig. 5) besteht aus einem Halteteller 5 mit einer am Außenumfang seines Hülsenteils 6 ausgebildeten Schneidwendel 7 (vgl. Fig. 1) und einem von oben durch eine Durchgangsbohrung 8 des Haltetellers 5 gesteckten Dübel 9 (vgl. Fig. 2), der ein Befestigungsmittel 23, z. B. eine Schraube, aufnimmt.

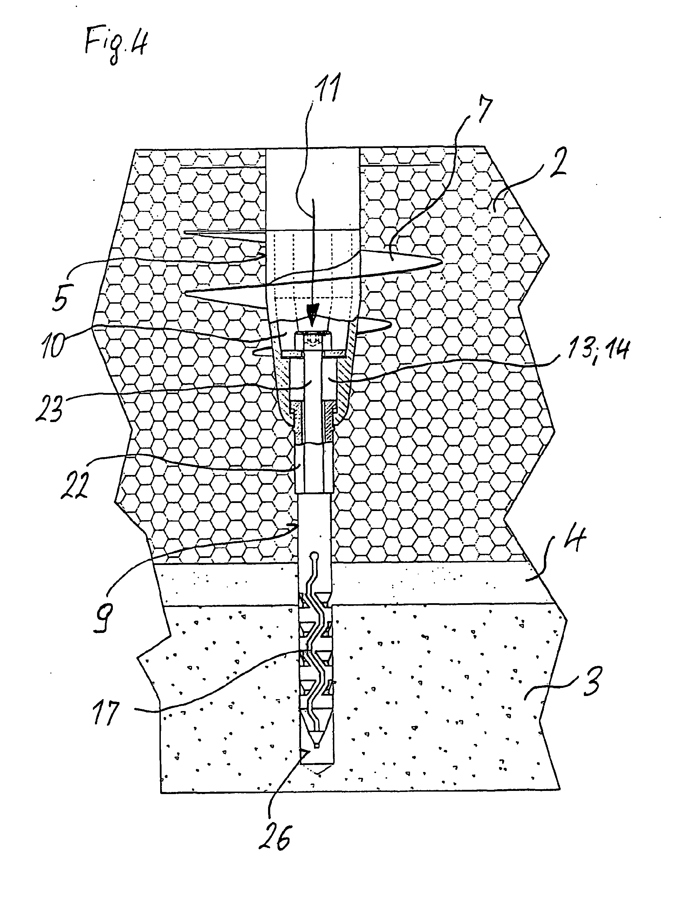

Die Durchgangsbohrung 8 des Haltetellers 5 ist stufenförmig ausgebildet und besitzt, von oben nach unten gesehen, einen Drehmitnahme-Innenmehr- bzw. - Sechskant 10, in den zum Montieren der Baueinheit 1 ein in den Fig. 3 und 4 durch einen Pfeil 12 angedeutetes Montagewerkzeug, wie ein Drehwerkzeug oder Schraubbohrer, eingreift, eine ringförmige Auflagefläche 12, einen sich daran anschließenden Zylinderraum 13, der einen Verschiebeweg bzw. Teleskopierbereich 14 bereit stellt, und einen abschließenden, unteren bzw. zweiten Innenmehrkant 15.

Der Dübel 9 (vgl, Fig. 2) weist, ebenfalls von oben nach unten, d. h. in Einbaurichtung gesehen, einen Dübelkopf 16 und einen mit einer Spreizzone 17 versehenen Dübeischaft 18 auf, wobei der Dübelkopf 16 zwischen einem Ringkragen 19 und einem darunter angeordneten wulstartigen Rastnocken 20 einen Zylinderabschnitt 21 sowie im Anschluß an den Rastnocken 20 einen Außenmehr- bzw. Sechskant 22 aufweist.

Der Dübel 9 wird durch den den Zylinderabschnitt 21 des Dübelkopfes 16 umschließenden unteren Innenmehrkant 15 des Hülsenteils 6 zwischen dem Ringkragen 19 und dem Rastnocken 20 in dem Halteteller 5 positioniert. Der Kopf 24 des Befestigungsmittels 23 liegt auf einer von der ringförmigen Auflagefläche 12 des Hülsenteils 6 abgestützten Unterlegscheibe 25 auf.

Die Fig. 4 zeigt die bereits in ein zuvor durch die Dämmstoffplatte 2 bis in den Untergrund 3 vorgebohrtes Bohrungsloch 26 gesteckte Baueinheit 1. Durch gemeinsames Eindrehen einerseits des sich um den Dübel 9 drehenden Haltetellers und andererseits des Befestigungsmittels 23 hat sich die Scheidwendel 7 in die Dämmstoffplatte 2 eingeschnitten sowie das Befestigungselement 23 die Spreizzone 17 des Dübelschaftes 18 aufgeweitet und den Dübel 9 im Untergrund verankert. Bei weiterer Drehbeaufschlagung des Befestigungsmittels 23 in dem festsitzenden Dübel 9 gleitet der Halteteller 5 mit dem unteren Innenmehrkant 15 seines Hülsenteils 6 Ober den Rastnocken 20 des Dübelkopfes 16 nach unten, so dass der untere Innenmehrkant 15 des Haltetellers 5 im Formeingriff mit dem Außenmehrkant 22 des Dübels 19 gelangt. Der Halteteller 5 kann sich damit ebenfalls nicht mehr drehen und verschiebt sich bzw. teleskopiert in dem von dem Zylinderraum 13 definierten Teleskopierbereich 14 nach unten, wobei die Dämmstoffplatte 2 verpresst und an den Untergrund angedrückt wird, wie in Fig. 5 durch die Materialverpressung 27 angedeutet. Das oberhalb des mit Verpressung des Dämmstoffmaterials 2 bis in seine Endposition relativ zum Dübel 9 nach unten verschobenen Haltetellers 5 verbleibende Loch kann mit einem bündig zur Dämmstoffplatte 2 verlaufenden Abdeckstopfen 28 verschlossen werden.

### Bezugszeichenliste

- 1: Baueinheit
- 2: Dämmstoffplatte
- 3: Untergrund
- 4: Putzkleber
- 5: Halteteller
- 6: Hülsenteil
- 7: Schneidwendel
- 8: Durchgangsbohrung (des Haltetellers)
- 9: Dübel
- 10: Drehmitnahme-Innenmehrkant (Sechskant)
- 11: Pfeil/Montagewerkzeug (Drehwerkzeug, Schraubbohrer)
- 12: ringförmige Auflagefläche
- 13: Zylinderraum
- 14: Verschiebeweg Teleskopierbereioh
- 15: unterer Innenmehrkant (Sechskant)
- 16: Dübelkopf
- 17: Spreizzone
- 18: Dübeischaft
- 19: Ringkragen
- 20: Restnocke
- 21: Zylinderabschnitt
- 22: Außenmehrkant (Sechskant)
- 23: Befestigungsmittel (Schraube)
- 24: Kopf (des Befestigungsmittels 23)
- 25: Unterlegscheibe
- 26: Bohrungsloch
- 27: Verpressung
- 28: Abdeckstopfen

## Patentansprüche

1. Verfahren zum Anbringen von Dämmstoffplatten (2) oder dergleichen Isoliermittel an einen Untergrund (3) mit einem Befestigungssystem, das einen mit einer Hülse und einer daran angeformten Schneidwendel (7) ausgebildeten Halteteller (5), der zum drehfesten Ansetzen eines Montagewerkzeugs (11) in Einbaurichtung gesehen oben mit einem Drehmitnahme-Innenmehrkant (10) versehen ist, und einen durch den Halteteller (5) hindurchgeführten, ein in dem Untergrund (3) verankerbares, kopfseitig ebenfalls zum drehfesten Ansetzen des Montagewerkzeugs ausgebildetes Befestigungsmittel (23) aufnehmenden Dübel (9) umfasst,
**dadurch gekennzeichnet,**
**dass** das Montagewerkzeug (11) mit gleichzeitiger Drehbewegung den sich dabei mit der Schneidwedel (7) in die Dämmstoffplatte (2) einschneidenden Halteteller (5) und das dabei den Dübel (9) spreizende Befestigungsmittel (23) beaufschlagt, wobei einerseits der Dübel (9) gespreizt und somit drehfest im Untergrund (3) verankert wird und wonach andererseits der Halteteller (5) bis zu einer drehfesten Verbindung mit dem Dübel (9) relativ zum Dübel (9) verschoben wird, wobei der Halteteller (5) sich bei Erreichen der drehfesten Verbindung ebenfalls nicht mehr drehen kann und in der Folge bei fortgesetzter Drehbewegung des Befestigungsmittels (23) mit teleskopierbarer Beweglichkeit und dabei mit Verpressung des Dämm- bzw. Isoliermaterials (2) relativ zum festliegenden Dübel (9) in eine Endposition verschoben wird.

2. Verfahren nach Anspruch 1,
**dadurch gekennzeichnet,**
**dass** die Verschiebung des Haltetellers (5) begrenzt wird.

3. Befestigungssystem zum Anbringen von Dämmstoffplatten (2) oder dergleichen Isoliermittel an einen Untergrund (3), umfassend einen mit einer Hülse (6) und einer daran angeformten Schneidwendel (7) ausgebildeten Halteteller (5), der zum drehfesten Ansetzen eines Montagewerkzeugs (11) in Einbaurichtung gesehen oben mit einem Drehmitnahme-Innenmehrkant (10) versehen ist, und einen durch den Halteteller (5) hindurchgeführten, ein in dem Untergrund (3) verankerbares, kopfseitig ebenfalls zum drehfesten Ansetzen des Montagewerkzeugs ausgebildetes Befestigungsmittel (23) aufnehmenden Dübel (9), insbesondere zum Durchführen des Verfahrens nach Anspruch 1,
**dadurch gekennzeichnet,**
**dass** der Halteteller (5) in seinem Hülsenteil (6) unterhalb des Drehmitnahme-Innenmehrkantes (10) in einem Zylinderraum (13) mit einem Teleskopierbereich (14) ausgebildet ist, der einen Kopf (16) des Dübels (9) begrenzt linear verschieblich aufnimmt, der Kopf (16) des Dübels (9) einen in Einbaurichtung gesehen oberen Zylinderabschnitt (21) und einen sich daran nach unten hin anschließenden Außenmehrkant (22) aufweist, dem ein am Ende des Teleskopierbereichs (14) im Hülsenteil (6) komplementär ausgebildeter, unterer Innenmehrkant (15) zugeordnet ist, wobei die Linearverschiebung mit teleskopierbarer Beweglichkeit des Haltetellers (5) relativ zum Dübel (9) einsetzt, sobald das von dem angesetzten Montagewerkzeug (11) gedrehte Befestigungsmittel (23) den Halteteller (5) bis zur Spreizung und damit drehfesten Verankerung des Dübels (9) im Untergrund (3) relativ zum Dübel (9) verschoben hat und der untere Innenmehrkant (15) des Hülsenteils (6) den Außenmehrkant (22) des Dübels (9) aufnimmt, wobei der Formeingriff von Innenmehrkant (15) mit dem Außenmehrkant (2) den Halteteller (5) hindert, um den Dübel (9) zu rotieren.

4. Befestigungssystem nach Anspruch 3,
**dadurch gekennzeichnet,**
**dass** der Zylinderabschnitt (21) in Einbaurichtung gesehen oben von einem Ringkragen (19) und unten von einem umlaufenden, wulstartigen Rastnocken (20) begrenzt ist.

5. Befestigungssystem nach Anspruch 3 oder 4,
**dadurch gekennzeichnet,**
**dass** der Zylinderabschnitt (21) und der mit einer Spreizzone (17) ausgebildete Dübelschaft (18) des Dübels (9) einen gleichen Durchmesser aufweisen, der kleiner als die Abmessung des Außenmehrkants (22) ist.

6. Befestigungssystem nach einem der Ansprüche 3 bis 5,
**dadurch gekennzeichnet,**
**dass** im Hülsenteil (6) des Haltetellers (5) in Einbaurichtung gesehen oberhalb des Teleskopierbereichs (14) eine ringartige Auflagefläche (12) ausgebildet ist.

7. Dübel, insbesondere zur Verwendung bei einem Verfahren nach Anspruch 1 und/oder einem Befestigungssystem nach Anspruch 3,
**dadurch gekennzeichnet,**
**dass** er in Einbaurichtung gesehen von oben nach unten mit einem eingegrenzten Zylinderabschnitt (21), einem Außenmehrkant (22) und einem Dübelschaft (18) mit Spreizzone (17) ausgebildet ist.

8. Halteteller mit Schneidwendel, insbesondere zur Verwendung bei einem Verfahren nach Anspruch 1 und/oder einem Befestigungssystem nach Anspruch 3,
**dadurch gekennzeichnet,**
**dass** er ein Hülsenteil (6) mit einer gestuften Durchgangsbohrung (8) aufweist, die in Einbaurichtung gesehen oben mit einem ersten Innenmehrkant (10) und am unteren Ende mit einem zweiten Innenmehrkant (15) sowie einem zwischen diesen Mehrkantabschnitten vorgesehenen Zylinderraum (13) ausgebildet ist, dessen Durchmesser kleiner als der lichte Querschnitt des oberen, ersten Innenmehrkants (10) und größer als der lichte Querschnitt des unteren, zweiten Innenmehrkants (15) ist.

## Claims

1. A method for attaching insulating boards (2) or similar insulating means to a substructure (3) by means of a fastening system comprising a retaining plate (5) that is realized with a sleeve and a cutting spiral (7) integrally formed thereon and provided with a torque-transmitting polygonal socket (10) on its upper side referred to the installation direction in order to attach an installation tool (11) in a torque-proof fashion, as well as an anchor (9) that extends through the retaining plate (5) and accommodates a fastening means (23) that can be anchored in the substructure (3) and the upper end of which is also realized for attaching the installation tool in a torque-proof fashion,
**characterized in**
**that** the installation tool (11) simultaneously turns and acts upon the retaining plate (5) that cuts into the insulating board (2) with the cutting spiral (7) and the fastening means (23) that spreads apart the anchor (9), wherein the anchor (9) is spread apart and therefore anchored in the substructure (3) in a torque-proof fashion and the retaining plate (5) is subsequently displaced relative to the anchor (9) until it is connected to the anchor (9) in a torque-proof fashion, and wherein the retaining plate (5) also is no longer able to turn once the torque-proof connection is produced and consequently displaced into an end position relative to the stationary anchor (9) with telescopic moveability and simultaneous compression of the insulating material (2) as the rotational movement of the fastening means (23) continues.

2. The method according to Claim 1,
**characterized in**
**that** the displacement of the retaining plate (5) is limited.

3. A fastening system for attaching insulating boards (2) or similar insulating means to a substructure (3), comprising a retaining plate (5) that is realized with a sleeve (6) and a cutting spiral (7) integrally formed thereon and provided with a torque-transmitting polygonal socket (10) on its upper side referred to the installation direction in order to attach an installation tool (11) in a torque-proof fashion, as well as an anchor (9) that extends through the retaining plate (5) and accommodates a fastening means (23) that can be anchored in the substructure (3) and the upper end of which is also realized for attaching the installation tool in a torque-proof fashion, particularly for carrying out the method according to Claim 1,
**characterized in**
**that** the retaining plate (5) is realized with a telescoping region (14) in a cylindrical chamber (13) of its sleeve part (6) underneath the torque-transmitting polygonal socket (10), wherein said telescoping region accommodates a head (16) of the anchor (9) such that it can be linearly displaced to a limited degree, and in that the head (16) of the anchor (9) features an upper cylindrical section (21) referred to the installation direction and a downwardly adjacent polygonal section (22), to which a lower polygonal socket (15) designed in a complementary fashion on the end of the telescoping region (14) in the sleeve part (6) is assigned, wherein the linear displacement with telescopic moveability of the retaining plate (5) relative to the anchor (9) begins as soon as the fastening means (23) turned by the attached installation tool (11) has displaced the retaining plate (5) relative to the anchor (9) to such a degree that the anchor (9) is spread apart and therefore anchored in the substructure (3) in a rotationally rigid fashion and the lower polygonal socket (15) of the sleeve part (6) accommodates the polygonal section (22) of the anchor (9), and wherein the positive engagement between the polygonal socket (15) and the polygonal section (2) prevents the retaining plate (5) from turning the anchor (9).

4. The fastening system according to Claim 3,
**characterized in**
**that** the cylindrical section (21) is limited by an annular collar (19) on its upper side referred to the installation direction and a circumferential, bead-like latching cam (20) on its lower side.

5. The fastening system according to Claim 3 or 4,
**characterized in**
**that** the cylindrical section (21) and the anchor shaft (18) of the anchor (9) that is realized with a spreading zone (17) have an identical diameter, wherein this diameter is smaller than the dimension of the polygonal section (22).

6. The fastening system according to one of Claims 3 to 5,
**characterized in**
**that** a ring-like supporting surface (12) is formed in the sleeve part (6) of the retaining plate (5) above the telescoping region (14) referred to the installation direction.

7. An anchor, particularly for use in a method according to Claim 1 and/or a fastening system according to Claim 3,
**characterized in**
**that** it consists of a limited upper cylindrical section (21) referred to the installation direction, a downwardly adjacent polygonal section (22) and a bottom anchor shaft (18) with a spreading zone (17).

8. A retaining plate with cutting spiral, particularly for use in a method according to Claim 1 and/or a fastening system according to Claim 3,
**characterized in**
**that** it features a sleeve part (6) with a stepped through-bore (8) that is realized with a first upper polygonal socket (10) referred to the installation direction and with a second polygonal socket (15) on the lower end, as well as a cylindrical chamber (13) situated between these polygonal sections, wherein the diameter of said cylindrical chamber is smaller than the clear cross section of the first upper polygonal socket (10) and larger than the clear cross section of the second lower polygonal socket (15).

## Revendications

1. Procédé de montage de plaques de matériau isolant (2) ou d'un moyen isolant similaire sur un fond (3) avec un système de fixation, qui comprend un plateau de retenue (5) réalisé avec un manchon et une hélice coupante (7) façonnée sur celui-ci, qui est pourvu à des fins de pose solidaire en rotation d'un outil de montage (11) vu dans la direction de montage au dessus d'un polygone intérieur (10) entraînant en rotation, et une cheville (9) guidée à travers le plateau de retenue (5), recevant un moyen de fixation (23) pouvant être ancré dans le fond (3), réalisé du côté de la tête également à des fins de pose solidaire en rotation de l'outil de montage,
**caractérisé en ce que**
l'outil de montage (11) sollicite avec un mouvement de rotation simultané le plateau de retenue (5) incisant ainsi avec l'hélice coupante (7) la plaque de matériau isolant (2) et le moyen de fixation (23) déployant ainsi la cheville (9), dans lequel d'un côté la cheville (9) est déployée et de ce fait ancrée de manière solidaire en rotation dans le fond (3) et ensuite d'autre part le plateau de retenue (5) est déplacé par rapport à la cheville (9) jusqu'à une liaison solidaire en rotation avec la cheville (9), dans lequel le plateau de retenue (5) ne peut également plus tourner en rotation quand la liaison solidaire en rotation est obtenue et par conséquent est déplacé dans une position finale lors de la poursuite du mouvement de rotation du moyen de fixation (23) avec une mobilité télescopique et donc avec pressage du matériau isolant (2) par rapport à la cheville (9) immobilisée.

2. Procédé selon la revendication 1,
**caractérisé en ce que**
le déplacement du plateau de retenue (5) est limité.

3. Système de fixation pour monter des plaques de matériau isolant (2) ou un moyen isolant similaire sur un fond (3), comprenant un plateau de retenue (5) réalisé avec un manchon (6) et une hélice coupante (7) façonnée sur celui-ci, qui est pourvu à des fins de pose solidaire en rotation d'un outil de montage (11) vu dans la direction de montage au dessus d'un polygone intérieur (10) entraînant en rotation, et une cheville (9) guidée à travers le plateau de retenue (5), recevant un moyen de fixation (23) pouvant être ancré dans le fond (3), réalisé du côté de la tête également à des fins de pose solidaire en rotation de l'outil de montage, notamment pour mettre en oeuvre le procédé selon la revendication 1,
**caractérisé en ce que**
le plateau de retenue (5) dans sa partie de manchon (6) est réalisé en dessous du polygone intérieur entraînant en rotation (10) dans son espace cylindrique (13) avec une zone télescopique (14), qui reçoit avec un déplacement limité linéairement une tête (16) de la cheville (9), la tête (16) de la cheville (9) présente une portion cylindrique supérieure (21) vue dans la direction de montage et un polygone extérieur (22) s'y rattachant par-dessous, qui est coordonnée à un polygone intérieur inférieur (15), réalisé complémentairement à l'extrémité de la zone télescopique (14) dans la partie de manchon (6), dans lequel le déplacement linéaire avec mobilité télescopique du plateau de retenue (5) par rapport à la cheville (9) commence dès que le moyen de fixation (23) tourné en rotation par l'outil de montage (11) posé a déplacé le plateau de retenue (5) jusqu'au déploiement et donc l'ancrage solidaire en rotation de la cheville (9) dans le fond (3) par rapport à la cheville (9) et le polygone intérieur inférieur (15) de la partie de manchon (6) reçoit le polygone extérieur (22) de la cheville (9), dans lequel la mise en prise par formes complémentaires du polygone intérieur (15) avec le polygone extérieur (2) empêche le plateau de retenue (5) d'entrer en rotation autour de la cheville (9).

4. Système de fixation selon la revendication 3,
**caractérisé en ce que**
la portion cylindrique (21) vue dans la direction de montage est limitée au dessus par un collier annulaire (19) et au dessous par un ergot d'encliquetage (20) circonférentiel, formant bourrelet.

5. Système de fixation selon la revendication 3 ou 4,
**caractérisé** n ce que
la portion cylindrique (21) et la tige de cheville (18) de la cheville (9) réalisée avec une zone déployée présentent un même diamètre, qui est plus petit que la dimension du polygone extérieur (22).

6. Système de fixation selon une des revendications 3 à 5,
**caractérisé en ce que**
dans la partie de manchon (6) du plateau de retenue (5) vue dans la direction de montage, une surface d'appui annulaire (12) est réalisée au dessus de la zone télescopique (14).

7. Cheville, notamment à utiliser dans un procédé selon la revendication 1 et/ou un système de fixation selon la revendication 3,
**caractérisé en ce que**
elle est réalisée vue dans la direction de montage du haut vers le bas avec une portion cylindrique (21) limitée, un polygone extérieur (22) et une tige de cheville (18) avec zone déployée (17).

8. Plateau de retenue avec hélice coupante, notamment à utiliser dans un procédé selon la revendication 1 et/ou un système de fixation selon la revendication 3,
**caractérisé en ce que**
il présente une partie de manchon (6) avec un alésage traversant (8) en gradins, qui vu dans la direction de montage est réalisé en haut avec un premier polygone intérieur (10) et à l'extrémité inférieure avec un deuxième polygone intérieur (15) ainsi qu'un espace cylindrique (13) prévu entre ces portions de polygone, dont le diamètre est plus petit que la section transversale libre du premier polygone intérieur supérieur (10) et plus grand que la section transversale libre du deuxième polygone intérieur inférieur (15).
